# EUROPEAN PATENT SPECIFICATION

(11) **EP 1 554 864 B1**
(45) Date of publication and mention of the grant of the patent: **21.11.2012**
(21) Application number: 03808828.2
(22) Date of filing: 08.10.2003
(51) Int. Cl.: H04M 3/493, G10L 15/18

(54) **DIRECTORY ASSISTANT METHOD AND APPARATUS**
VERZEICHNISASSISTENTVERFAHREN UND VORRICHTUNG
PROCEDE ET APPAREIL D'ASSISTANCE-ANNUAIRE

(30) Priority: 16.10.2002 EP 02102454
(43) Date of publication of application: 20.07.2005
(73) Proprietor: Nuance Communications, Inc., Burlington, MA 01748 (US)
(72) Inventor: WANG, J.C., Philips I. P.& Standards GmbH, 52066 Aachen (DE); SEIDE, F.T.B., Philips I. P. & Standards GmbH, 52066 Aachen (DE); LIAO, Y.F., Philips I. P. & Standards GmbH, 52066 Aachen (DE)
(74) Representative: Hill, Justin John
(86) International application number: PCT/IB2003/004429
(87) International publication number: WO 2004/036887

(56) References cited:
- EP-A- 1 172 994
- WO-A-00/36591
- WO-A-97/28634
- US-A- 5 638 425
- KELLNER A ET AL: "PADIS - An automatic telephone switchboard and directory information system" SPEECH COMMUNICATION, ELSEVIER SCIENCE PUBLISHERS, AMSTERDAM, NL, vol. 23, no. 1-2, 1 October 1997 (1997-10-01), pages 95-111, XP004117212 ISSN: 0167-6393
- ATTWATER D J ET AL: "ISSUES IN LARGE-VOCABULARY INTERACTIVE SPEECH SYSTEMS" BT TECHNOLOGY JOURNAL, BT LABORATORIES, GB, vol. 14, no. 1, 1996, pages 177-186, XP000554647 ISSN: 1358-3948

## Description

The present invention relates to a directory assistant method and apparatus, and more particularly, to a directory assistant method and apparatus in an automatic dialogue telecommunications system.

The directory assistant (DA) system, providing telephone numbers to customers, is an important telecommunications business. For example, the Kelsey Group estimates that telecom companies worldwide collectively receive more than 516 millions DA calls per month, almost all of which are currently handled by operators. Automating this service using speech recognition is a large market opportunity.

The conventional DA system is implemented by using a restricted dialogue. Traditionally, it first asks a user to say the name of the person to be reached, then uses a speech recognizer to locate several candidates from a directory database. Issues specific to European-type languages, such as words that are pronounced the same but spelt differently, are dealt with in directory assistant methods described in WO 97/28634 and WO 00/36591. If the candidates are too many, the DA system further asks the user to spell the name of the desired person or to provide extra information, for example, the name of the street where the desired person lives. In this way, the range of the candidates can be further narrowed down. Such a directory assistance method is described in "Issues in large-vocabulary interactive speech systems" (Attwater et al, BT Technology Journal), and in US 5,638,425. Finally, the DA system asks the user to choose the right one by answering a corresponding number or just "yes/no". This DA system works well for a small Western DA system. But it may not work well for a large-scale directory assistant system having, for example, 12,000,000 entries used in a large city, since the above-mentioned input information is not sufficient to differentiate all possible candidates. More sophisticated directory enquiry systems can deal with directory entries for several cities, as described in EP 1 172 994, or can interact with the user in a human-like and natural fashion, as described in "PADIS - An automatic telephone switchboard and directory information system" (A. Kellner et al, speech Communication).

However, all of the above mentioned systems are designed for use with a European language such as English or German, and simply do not work well for a large-scale Chinese DA system, either. The input information is not sufficient to differentiate all possible candidates due to the following specific features. First of all, Chinese is a monosyllabic language. Each word of Chinese contains exactly one syllable. There are more than 13000 commonly used words and only 1300 legal syllables. On average, there are about 10 homophones for each syllable. Secondly, a Chinese name is usually shorter than a Western name. The Chinese name usually has three syllables only. Moreover, there are about two hundred family names (surnames) frequently used by billions of Chinese. Therefore, more information is needed to solve the ambiguities in a Chinese DA system. Thirdly, Chinese is an ideographic language. Chinese usually introduce their names to other people by describing their name word by word and by some commonly used phrases. There is no easy and standard way to "spell" or "compose" Chinese words. Therefore, the performance of current DA systems is not satisfactory, especially the Chinese DA systems.

It is an object of the present invention to provide an improved directory assistant method and apparatus for providing desired directory entry information, suitable for use with different types of languages. This object is achieved by a directory assistant method according to claim 1 and a directory assistant apparatus according to claim 18. The directory assistant method and apparatus use natural language dialogue system to ask users to describe the desired directory entry and then use the relevant knowledge databases to parse and understand these descriptions and interpret their meanings. Finally, the directory assistant method and apparatus integrate all available information from several dialogues turns, directory database and relevant knowledge database, and then provide the users' desired directory entry information.

It is another object of the present invention to provide a computer program product residing on a computer readable medium having a plurality of instructions stored thereon which, when executed by a processor, cause the processor to provide desired directory entry information.

The invention will become more fully understandable from the detailed description given below and the accompanying drawings, which are given by way of illustration only and thus are not imitative, wherein:
Fig. 1 illustrates a block diagram of the directory assistant apparatus of the present invention;
Fig. 2 illustrates the generation of name description grammar rules from frequently used templates and frequently used words of the present invention; and
Fig. 3 illustrates a flow chart of the directory assistant method of the present invention.

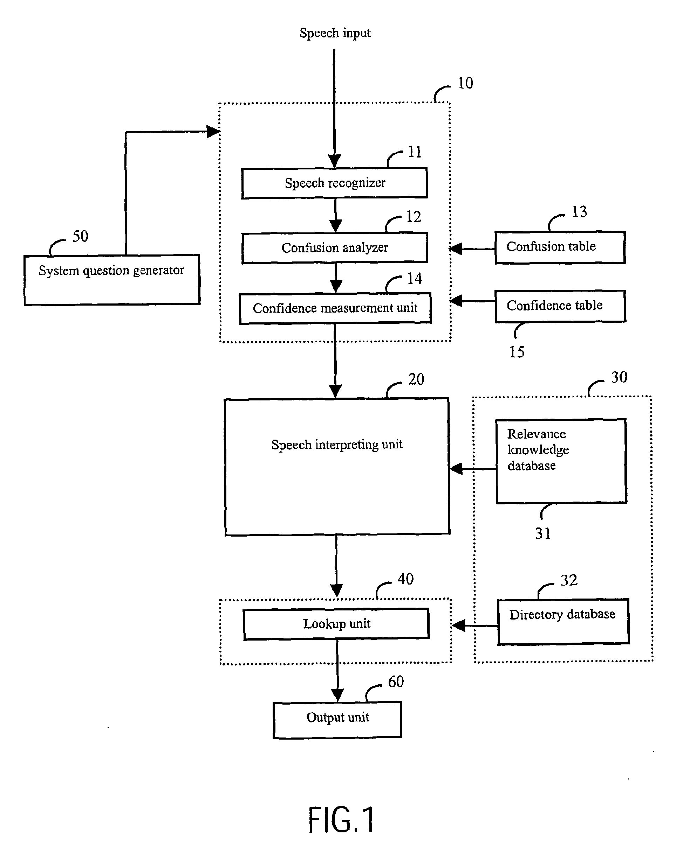

Referring to Fig. 1, the directory assistant apparatus of the present invention, such as a Mandarin directory assistant apparatus, comprises a database 30 comprising a directory database 32 for storing directory entry information, and a relevant knowledge database 31 for storing grammar rules and concept sequences; an acoustic recognition unit 10 for receiving a speech signal describing the desired directory entry, recognizing the speech signal and generating recognized word sequences; a speech interpreting unit 20 for interpreting the recognized word sequences by using a predetermined name description grammar rule and relevant information thereof stored in the relevant knowledge database 31 to form concept sequences and interpreting the concept sequences according to semantic meaning and relevant information thereof stored in the relevant knowledge database 31 and current system status thereof, thereby generating at least one candidate by using one of maximum a posterior probabilities and maximum likelihood criterion for the desired directory entry, in addition, the speech interpreting unit 20 further updates the system status; a look up unit 40 for looking up at least one directory entry information corresponding to the at least one candidate from the directory database 32; and an output unit 60 (such as a speech output unit) for outputting the at least one directory entry information located.

The directory assistant apparatus of the present invention further comprises a question generator 60 for generating a question to request more information, wherein the question is one of requesting a user to supply more information, listing-based confirmation and open-question confirmation. The listing-based confirmation is used when the potential candidates are in a limit of numbers, or the probability of the top one is far from those of the others. The open-question confirmation is used when the most popular description way in name database to ask users for confirmation, for example: you mean 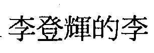 (the same Li3 as in Li3 Deng1 Hue1).

The acoustic recognition unit 10 further comprises a speech recognizer 11 for recognizing the input speech signal and generating recognized word sequences; a confusion analyzer 12 for expanding the recognized word sequences according to a confusion table 13, wherein the confusion table 13 is pre-trained and comprises all confusable words, their corresponding correct ones and occurring probabilities; and a confidence measurement unit 14 for filtering out confusable word pairs according to a confidence table 15.

The database 30 comprises a relevant knowledge database 31 and a directory database 32. The relevant knowledge database 31 comprises words and using frequencies thereof, ways to describe the words, grammar rules, attributes and corresponding using frequencies, communication concepts and their frequencies of usage, corresponding grammar rules, semantic meaning and frequencies of usage, while the directory database 32 comprises a plurality of entries, wherein each entry comprises name, telephone number, relevant information and frequencies of usage.

In the relevant knowledge database 31, popular words in names are stored with several popular descriptive ways, wherein the grammar rule and concept sequences are used to describe the desired directory entry comprising entry name or at least one word of entry name and relevant information thereof, and the grammar rule is generated by frequently used grammar templates and frequently used words. The grammar templates are generated by one of frequently used nouns, names of famous people, idioms, character strokes, letters, words, and character roots, etc. For examples, words in names can be described as follows:
- famous family name description, like 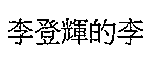 (same Li3 as in Li3 Deng1 Hue1).
- famous name description, like 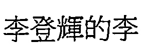 (same Li3 as in Li3 Deng1 Hue1).
- Common used word, phrase and especially four-word Chinese idioms, like 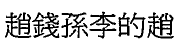 (same Zhau4 as in Zhau4 Chien2 Sun1 Li3). common used writing/strokes description, like 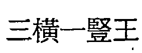 (Wang2 that has three horizontal lines and one vertical line); or 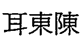 (Chen2 that has an ear and a east).

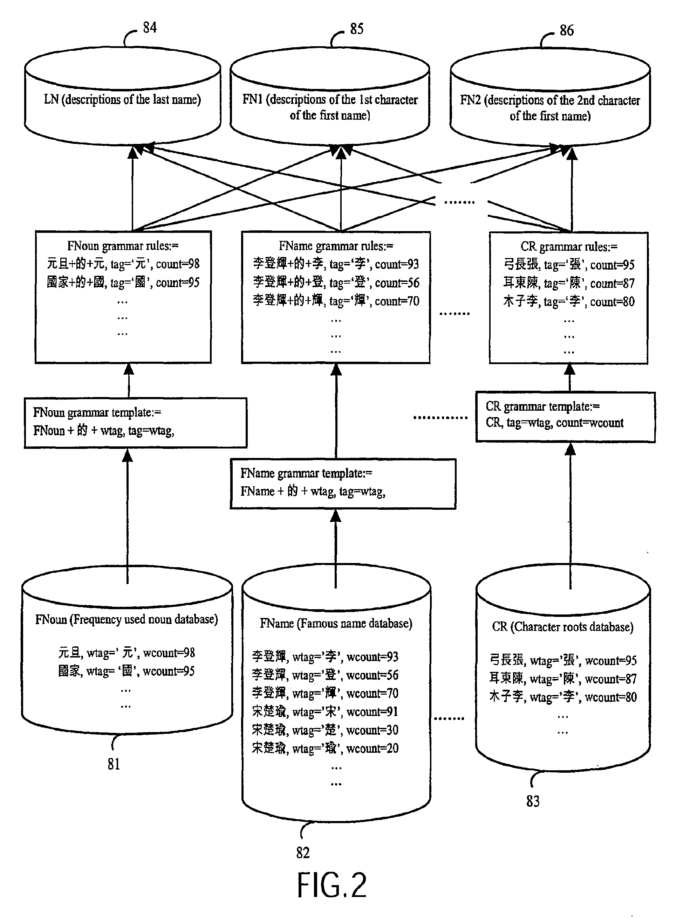

Fig. 2 illustrates the generation of name description grammar rules from frequently used templates and frequently used words of the present invention. The present invention first builds a database which collects the name description grammar rules and their corresponding semantic tags.

There are two ways to build the database. The first way is to collect as many names as possible and their corresponding character descriptions. From this database, we have found name description grammar rules and their probability statistics such as LN (descriptions of the last name) 84, FN1 (descriptions of the first word of the first name) 85 and FN2 (description of the second word of the first name) 86.

The second way is to find frequently used grammar templates from a small database of name descriptions (for example the database mentioned above). Then we use the found grammar templates and frequently used words to generate the necessary grammar rules. For example, we have found that the most popular ways to describe the words of names are:
- Frequently used nouns (FNoun) 81;
- Names of famous people (FName) 82;
- Idioms (CI);
- Character Strokes (CS);
- Frequently used foreign words (FW);
- Character roots (CR) 83;
- Other irregular way (OW).

We can then build the necessary grammar rules by combining these grammar templates and frequently used words (collected from dictionary, internet, newspaper, etc.).

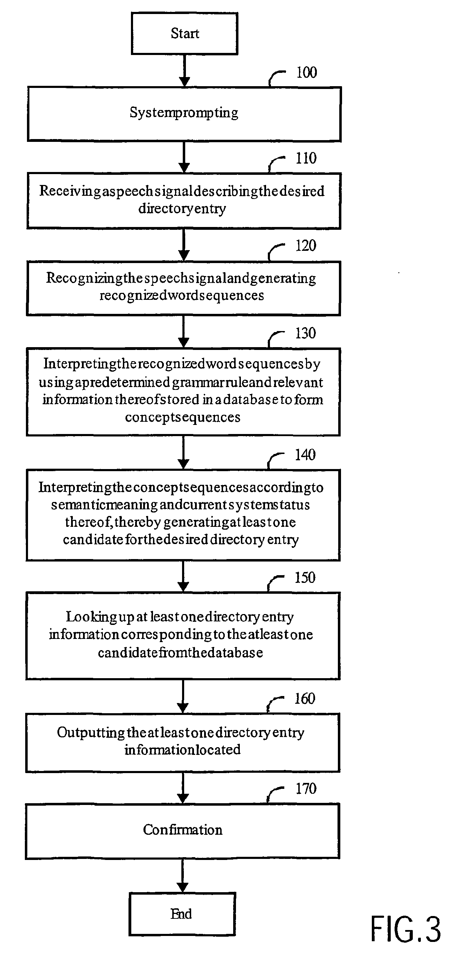

Referring to Fig. 3, the directory assistant method of the present invention, such as a Mandarin directory assistant method, is described as follows:

The method first prompts a question to ask the user to speech input the desired entry (100); then receives a speech signal describing the desired directory entry (110); recognizes the speech signal and generating recognized word sequences, expands the recognized word sequences according to a confusion table and filters out confusable word pairs according to a confidence table (120); interprets the recognized word sequences by using a predetermined grammar rule and relevant information thereof stored in a database to form concept sequences (130); interprets the concept sequences according to semantic meaning and relevant information thereof stored in the database and current system status thereof, thereby generating at least one candidate by using one of maximum a posterior probabilities and maximum likelihood criterion for the desired directory entry and updates the system status; looks up at least one directory entry information corresponding to the at least one candidate from the database and generates a question to request more information if there are uncertainties (150); outputs the at least one directory entry information located (160); and confirms the located directory entry information and repeats the above steps until the desired directory entry information is located (170).

The above-mentioned method can be implemented by computer program instructions. The computer program instructions can be loaded into a computer or other programmable processing devices to perform the functions of the method illustrated in Fig. 3. The computer program instructions can be stored in a computer program product or computer readable medium. Examples of a computer program product or computer readable medium includes recordable-type medium such as a magnetic tape, a floppy disc, a hard disc drive, a RAM, a ROM and an optical disc and transmission-type medium such as digital and analog communication links.

The present invention is directed to understanding ways of describing words in names, building up a relevant knowledge database to store ways of describing words in names and using the database as grammar rules to parse input speech. By this new architecture, the present invention can use the natural language dialogues system to ask the user to describe the words of names when there are still uncertainties. The present invention then uses the relevance knowledge database to parse and understand these descriptions and interpret their meaning. Finally, the present invention combines all available information to narrow down the range of possible candidates and finally locates the correct directory entry. Although part of the present invention is described by using Chinese words as an example, the present invention can also be applied to other languages. For example, famous family name description, like 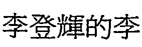 (same Li3 as in Li3 Deng1 Hue1), can be changed to "Bush as in George Bush."

Although the present invention and its advantages have been described in detail, it should be understood that various changes, substitutions and alternations can be made herein without departing from the scope of the invention as defined by the appended claims.

### PRIOR ART REFERENCES

1. Nick Wang and Leo Liao, Chinese name recognition, invention disclosure, submitted to Philips Corporate Intellectual Property, 11 Oct. 2000
2. Andreas Kellner, Bernhard Rueber, Frank Seide, and Bach-Hiep Tran., "PADIS -- an Automatic Telephone Switchboard and Directory Information System", Speech Communication, 23:95--111, Oct 1997
3. Bernd Souvignier, Andreas Kellner, Bernhard Rueber, Hauke Schramm, and Frank Seide., "The Thoughtful Elephant: Strategies for Spoken Dialog Systems". IEEE Transactions on Speech and Audio Processing, 8(1):51--62, January 2000
4. Georg Rose, "PADIS-XXL, Large Scale Directory Assistant," PowerPoint Slide, Man-Machine Interface, 2000.
5. Andreas Meylahn, "SpeechFinder for SpeechPerl 2000 - Developer's Guide v2.0", Philips Speech Processing - Aachen, Germany, 21 Sep. 2000
6. Yen-Ju Yang ( 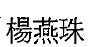 ) ,"Statistics-based spoken dialogue modeling and its applications," PhD's Thesis, National Taiwan University, Taiwan, 1999.
7. Jan Kneissler and Dietrich Klakow, "Speech Recognition for Huge Vocabularies by Using Optimized Sub-Word Units"
8. Dietrich Klakow, Georg Rose and Xavier Aubert, "OOV-Detection in Large Vocabulary System Using Automatically Defined Word-Fragments as Fillers", Proc. EUROSPEECH, Vol. 1, 1999, pp. 49-53.
9. Alex Weibel, Petra Geutner, Laura Mayfield Tomokiyo, Tanja Schultz and Monika Woszcyna, "Multilinguality in Speech and Spoken Language Systems," Proceedings of the IEEE, Vol. 88, No. 8, August 2000, pp. 1297-1313.

## Claims

1. A directory assistant method for providing desired directory entry information to a user, comprising the steps of:
a) receiving a speech signal describing the desired directory entry;
b) recognizing the speech signal and generating recognized word sequences;
**characterised by** comprising the steps of:
c) interpreting the recognized homophonic word sequences by using a predetermined name description grammar rule and relevant information thereof stored in a relevant knowledge database (31) to form concept sequences, whereby the relevant knowledge database (31) comprises words and one or more ways to describe the words comprising frequently used nouns, names of famous people, idioms, character strokes, frequently used foreign words, character roots;
d) interpreting the concept sequences according to semantic meaning and relevant information thereof stored in the relevant knowledge database (31) and current system status thereof, thereby generating at least one candidate for the desired directory entry;
e) looking up at least one directory entry information corresponding to the at least one candidate from the database; and
f) outputting the at least one directory entry information located.

2. The method as claimed in Claim 1, wherein the step e) further comprises the step of generating a question in the case of uncertainties to request the user to describe the words of names in a candidate directory database entry.

3. The method as claimed in Claim 1, further comprising the steps of user's correction or confirmation and repeating the steps a) to f) until the desired directory entry information is located.

4. The method as claimed in Claim 1, wherein the step a) further comprises the step of system prompting before receiving a speech signal.

5. The method as claimed in Claim 1, wherein the predetermined name description grammar rule and concept sequences are used to describe the desired directory entry comprising entry name or at least one word of entry name and relevant information thereof.

6. The method as claimed in Claim 1, wherein the predetermined name description grammar rule is generated by frequently used grammar templates and frequently used words.

7. The method as claimed in Claim 6, wherein the grammar templates are generated by one of frequently used nouns, names of famous people, idioms, character strokes, letters, words, and character roots.

8. The method as claimed in Claim 1, wherein the step b) further comprises the step of expanding the recognized word sequences according to a confusion table (13).

9. The method as claimed in Claim 8, wherein the confusion table (13) is pre-trained and comprises all confusable words, their corresponding correct ones and occurring probabilities.

10. The method as claimed in Claim 1, wherein the step b) further comprises the step of confidence measurement for filtering out confusable word pairs according to a confidence table (15).

11. The method as claimed in Claim 1, wherein the step d) further comprises the step of updating the system status.

12. The method as claimed in Claim 1, wherein the relevant knowledge database (31) comprises words and using frequencies thereof, ways to describe the words, grammar rules, attributes and corresponding frequencies of usage.

13. The method as claimed in Claim 1, wherein the relevant knowledge database (31) comprises communication concepts and frequencies of usage thereof, corresponding grammar rules, semantic meaning and frequencies of usage.

14. The method as claimed in Claim 1, wherein the directory database (32) comprises a plurality of entries, wherein each entry comprises name, telephone number, relevant information and using frequency.

15. The method as claimed in Claim 1, wherein the at least one candidate is generated by using one of maximum a posterior probabilities and maximum likelihood criterion.

16. The method as claimed in Claim 1, wherein the method is a Mandarin directory assistant method.

17. A computer program product residing on a computer readable medium having a plurality of instructions stored thereon which, when executed by a processor, cause the processor to:
- receive a speech signal from a user describing the desired directory entry;
- recognize the speech signal and generating recognized word sequences;
**characterised in that** the processor is caused to
- interpret the recognized homophonic word sequences by using a predetermined name
- interpret the recognized homophonic word sequences by using a predetermined name description grammar rule and relevant information thereof stored in a relevant knowledge database (31) to form concept sequences, whereby the relevant knowledge database (31) comprises words and one or more ways to describe the words comprising frequently used nouns, names of famous people, idioms, character strokes, frequently used foreign words, character roots;
- interpret the concept sequences according to semantic meaning and relevant information thereof stored in the relevant knowledge database (31) and current system status thereof, thereby generating at least one candidate for the desired directory entry;
- look up at least one directory entry information corresponding to the at least one candidate from a directory database (32); and
- output the at least one directory entry information located.

18. A directory assistant apparatus for providing desired directory entry information, comprising:
- a database (30) comprising a directory database (32) for storing directory entry information, and a relevant knowledge database (31) for storing grammar rules and concept sequences;
- an acoustic recognition unit (10) for receiving a speech signal describing the desired directory entry, recognizing the speech signal and generating recognized word sequences; **characterised by**
- a speech interpreting unit (20) for interpreting the recognized homophonic word sequences by using a predetermined name description grammar rule and relevant information thereof stored in the relevant knowledge database (31) to form concept sequences, whereby the relevant knowledge database (31) comprises words and one or more ways to describe the words comprising frequently used nouns, names of famous people, idioms, character strokes, frequently used foreign words, character roots, and interpreting the concept sequences according to semantic meaning and relevant information thereof stored in the relevant knowledge database (31) and current system status thereof, thereby generating at least one candidate for the desired directory entry;
- a look up unit (40) for looking up at least one directory entry information corresponding to the at least one candidate from the directory database (32); and
- an output unit (60) for outputting the at least one directory entry information located.

19. The directory assistant apparatus of Claim 18, wherein the predetermined grammar rule and concept sequences are used to describe the desired directory entry comprising entry name or at least one word of entry name and relevant information thereof.

20. The directory assistant apparatus of Claim 18, wherein the relevant knowledge database (31) comprises words and using frequencies thereof, ways to describe the words, grammar rules, attributes and corresponding using frequencies.

21. The directory assistant apparatus of Claim 18, wherein the relevant knowledge database (31) comprises communication concepts and frequencies of usage thereof, corresponding grammar rules, semantic meaning and frequencies of usage.

22. The directory assistant apparatus of Claim 18, wherein the directory database (32) comprises a plurality of entries, wherein each entry comprises name, telephone number, relevant information and frequencies of usage.

23. The directory assistant apparatus of Claim 18, wherein the predetermined grammar rule is generated by frequently used grammar templates and frequently used words.

24. The directory assistant apparatus of Claim 23, wherein the grammar templates are generated by one of frequently used nouns, names of famous people, idioms, character strokes, letters, words, and character roots.

25. The directory assistant apparatus of Claim 18, wherein the acoustic recognition unit (10) further comprises a speech recognizer (11) for recognizing the speech signal and generating recognized word sequences.

26. The directory assistant apparatus of Claim 18, wherein the acoustic recognition unit (10) further comprises a confusion analyzer (12) for expanding the recognized word sequences according to a confusion table (13).

27. The directory assistant apparatus of Claim 26, wherein the confusion table (13) is pre-trained and comprises all confusable words, their corresponding correct ones and occurring probabilities.

28. The directory assistant apparatus of Claim 18, wherein the acoustic recognition unit (10) further comprises a confidence measurement unit (14) for filtering out confusable word pairs according to a confidence table (15).

29. The directory assistant apparatus of Claim 18, wherein the speech interpreting unit (20) continuously updates the system status.

30. The directory assistant apparatus of Claim 18, further comprising a question generator (50) for generating a question to request more information.

31. The directory assistant apparatus of Claim 30, wherein the question is one of requesting a user to supply more information, listing-based confirmation and open-question confirmation.

32. The directory assistant apparatus of Claim 18, wherein the at least one candidate is generated by using one of maximum a posterior probability and maximum likelihood criterion.

33. The directory assistant apparatus of Claim 18, wherein the outputting unit (60) is a speech output unit.

34. The directory assistant apparatus of Claim 18, wherein the directory assistant apparatus is a Mandarin directory assistant apparatus.

## Patentansprüche

1. Ein Telefonauskunftsverfahren zur Bereitstellung gewünschter Telefonbucheinträge für einen Benutzer, bestehend aus den Schritten:
a) Empfang eines Sprachsignals, das den gewünschten Telefonbucheintrag beschreibt;
b) Erkennung des Sprachsignals und Erzeugung erkannter Wortsequenzen, bestehend aus den Schritten:
c) Interpretation der erkannten homophonen Wortsequenzen mittels einer vorbestimmten Grammatikregel für die Namensbeschreibung und diesbezüglicher, in einer relevanten Wissensdatenbank (31) gespeicherter Informationen, zur Bildung von Konzeptsequenzen, wobei die relevante Wissensdatenbank (31) Wörter und eine oder mehrere Möglichkeiten der Beschreibung dieser Wörter, darunter häufig benutzte Hauptwörter, Namen bekannter Persönlichkeiten, Idiome, Schriftzeichenstriche, häufig benutzte Fremdwörter und Basisschriftzeichen enthält;
d) Interpretation der Konzeptsequenzen gemäß semantischer Bedeutung und diesbezüglicher, in der relevanten Wissensdatenbank (31) gespeicherter Informationen sowie aktuellem Systemstatus, um mindestens einen Kandidaten für den gewünschten Telefonbucheintrag zu erzeugen;
e) Auffinden von mindestens einem Telefonbucheintrag, der dem mindestens einen Kandidaten aus der Datenbank entspricht, und
f) Übermittlung des mindestens einen gefundenen Telefonbucheintrags an den Benutzer.

2. Das Verfahren nach Anspruch 1, wobei Schritt e) weiter den Schritt der Erzeugung einer Frage umfasst, die den Benutzer im Falle von Ungewissheiten auffordert, die Wörter eines Namens in einem Auskunftsdatenbankeintrag zu beschreiben.

3. Das Verfahren nach Anspruch 1, weiter bestehend aus den Schritten der Berichtigung bzw. Bestätigung durch den Benutzer und Wiederholung der Schritte a) bis f), bis der gewünschte Telefonbucheintrag gefunden wurde.

4. Das Verfahren nach Anspruch 1, wobei Schritt a) weiter den Schritt der Eingabeaufforderung durch das System umfasst, bevor ein Sprachsignal empfangen wird.

5. Das Verfahren nach Anspruch 1, wobei die vorbestimmte Grammatikregel für die Namensbeschreibung und die Konzeptsequenzen dazu dienen, den gewünschten Telefonbucheintrag anhand des Eintragsnamens oder mindestens eines Wortes des Eintragsnamens und diesbezüglicher Informationen zu beschreiben.

6. Das Verfahren nach Anspruch 1, wobei die vorbestimmte Grammatikregel für die Namensbeschreibung durch häufig benutzte Grammatikschablonen und häufig benutzte Wörter erzeugt wird.

7. Das Verfahren nach Anspruch 6, wobei die Grammatikschablonen entweder von einem häufig benutzten Hauptwort, dem Namen einer bekannten Persönlichkeit, einem Idiom, Schriftzeichenstrich, häufig benutzten Fremdwort oder Basisschriftzeichen erzeugt werden.

8. Das Verfahren nach Anspruch 1, wobei Schritt b) weiter den Schritt der Erweiterung der erkannten Wortsequenzen gemäß einer Konfusionsmatrix (13) umfasst.

9. Das Verfahren nach Anspruch 8, wobei die Konfusionsmatrix (13) vorgebildet ist und alle verwechselbaren Wörter, entsprechende korrekte Wörter und die Wahrscheinlichkeiten des Vorkommens der Wörter enthält.

10. Das Verfahren nach Anspruch 1, wobei Schritt b) weiter den Schritt der Konfidenzmessung zum Herausfiltern verwechselbarer Wortpaare gemäß einer Konfusionsmatrix (15) umfasst.

11. Das Verfahren nach Anspruch 1, wobei Schritt d) weiter den Schritt der Aktualisierung des Systemstatus umfasst.

12. Das Verfahren nach Anspruch 1, wobei die relevante Wissensdatenbank (31) Wörter und deren Nutzungshäufigkeit, Möglichkeiten der Beschreibung der Wörter, Grammatikregeln, Attribute und deren Nutzungshäufigkeit enthält.

13. Das Verfahren nach Anspruch 1, wobei die relevante Wissensdatenbank (31) Kommunikationskonzepte und deren Nutzungshäufigkeit, entsprechende Grammatikregeln, semantische Bedeutungen und deren Nutzungshäufigkeit enthält.

14. Das Verfahren nach Anspruch 1, wobei die Auskunftsdatenbank (32) eine Vielzahl von Einträgen enthält, wobei sich jeder Eintrag aus Namen, Telefonnummer, relevanten Informationen und Nutzungshäufigkeit zusammensetzt.

15. Das Verfahren nach Anspruch 1, wobei der mindestens eine Kandidat mittels einer Maximum-A-posteriori-Methode bzw. einer Maximum-Likelihood-Methode erzeugt wird.

16. Das Verfahren nach Anspruch 1, wobei die Methode eine Telefonauskunftsmethode für Mandarin-Chinesisch ist.

17. Ein auf einem rechnerlesbaren Medium installiertes Computerprogramm mit einer Vielzahl von darin gespeicherten Anweisungen, die bei der Ausführung durch einen Prozessor bewirken, dass der Prozessor:
ein Sprachsignal empfängt, das einen Telefonbucheintrag beschreibt;
das Sprachsignal erkennt und erkannte Wortsequenzen beschreibt, **dadurch gekennzeichnet, dass** der Prozessor:
die erkannten homophonen Wortsequenzen zur Bildung von Konzeptsequenzen mittels einer vorbestimmten Grammatikregel für die Namensbeschreibung und
diesbezüglicher, in einer relevanten Wissensdatenbank (31) gespeicherter Informationen interpretiert, wobei die relevante Wissensdatenbank (31) Wörter und eine oder mehrere Möglichkeiten der Beschreibung dieser Wörter, darunter häufig benutzte Hauptwörter, Namen bekannter Persönlichkeiten, Idiome, Schriftzeichenstriche, häufig benutzte Fremdwörter und Basisschriftzeichen enthält;
die Konzeptsequenzen gemäß semantischer Bedeutung und diesbezüglicher, in der relevanten Wissensdatenbank (31) gespeicherter Informationen sowie aktuellem Systemstatus interpretiert, um mindestens einen Kandidaten für den gewünschten Telefonbucheintrag zu erzeugen;
mindestens einen Telefonbucheintrag findet, der dem mindestens einen Kandidaten aus der Datenbank entspricht, und
den mindestens einen gefundenen Telefonbucheintrag an den Benutzer übermittelt.

18. Eine Telefonauskunftsvorrichtung für die Bereitstellung gewünschter Telefonbucheinträge, bestehend aus:
einer Datenbank (30) bestehend aus einer Auskunftsdatenbank (32) zur Speicherung von Telefonbucheinträgen und einer relevanten Wissensdatenbank (31) zur Speicherung von Grammatikregeln und Konzeptsequenzen;
einem Akustikerkennungsgerät (10) zum Empfang und zur Erkennung eines Sprachsignals, das den gewünschten Telefonbucheintrag beschreibt, und Erzeugung erkannter Wortsequenzen, **gekennzeichnet durch**:
ein Sprachinterpretationsgerät (20) für die Interpretation der erkannten homophonen Wortsequenzen mittels einer vorbestimmten Grammatikregel für die Namensbeschreibung und diesbezüglicher, in einer relevanten Wissensdatenbank (31) gespeicherter Informationen zur Bildung von Konzeptsequenzen, wobei die relevante Wissensdatenbank (31) Wörter und eine oder mehrere Möglichkeiten der Beschreibung dieser Wörter, darunter häufig benutzte Hauptwörter, Namen bekannter Persönlichkeiten, Idiome, Schriftzeichenstriche, häufig benutzte Fremdwörter und Basisschriftzeichen enthält, und für die Interpretation von Konzeptsequenzen gemäß semantischer Bedeutung und diesbezüglicher, in der relevanten Wissensdatenbank (31) gespeicherter Informationen sowie aktuellem Systemstatus, um mindestens einen Kandidaten für den gewünschten Telefonbucheintrag zu erzeugen;
eine Suchfunktion (40) zum Auffinden von mindestens einem Telefonbucheintrag, der dem mindestens einen Kandidaten aus der Auskunftsdatenbank (32) entspricht, und
einem Übermittlungsgerät (60) für die Übermittlung des mindestens einen gefundenen Telefonbucheintrags an den Benutzer.

19. Die Telefonauskunftsvorrichtung nach Anspruch 18, wobei die vorbestimmte Grammatikregel für die Namensbeschreibung und die Konzeptsequenzen dazu dienen, den gewünschten Telefonbucheintrag anhand des Eintragsnamens oder mindestens eines Wortes des Eintragsnamens und diesbezüglicher Informationen zu beschreiben.

20. Die Telefonauskunftsvorrichtung nach Anspruch 18, wobei die relevante Wissensdatenbank (31) Wörter und deren Nutzungshäufigkeit, Möglichkeiten der Beschreibung der Wörter, Grammatikregeln, Attribute und deren Nutzungshäufigkeit enthält.

21. Die Telefonauskunftsvorrichtung nach Anspruch 18, wobei die relevante Wissensdatenbank (31) Kommunikationskonzepte und deren Nutzungshäufigkeit, entsprechende Grammatikregeln, semantische Bedeutungen und deren Nutzungshäufigkeit enthält.

22. Die Telefonauskunftsvorrichtung nach Anspruch 18, wobei die Auskunftsdatenbank (32) eine Vielzahl von Einträgen enthält, wobei sich jeder Eintrag aus Namen, Telefonnummer, relevanten Informationen und Nutzungshäufigkeit zusammensetzt.

23. Die Telefonauskunftsvorrichtung nach Anspruch 18, wobei die vorbestimmte Grammatikregel durch häufig benutzte Grammatikschablonen und häufig benutzte Wörter erzeugt wird.

24. Die Telefonauskunftsvorrichtung nach Anspruch 23, wobei die Grammatikschablonen entweder von einem häufig benutzten Hauptwort, dem Namen einer bekannten Persönlichkeit, einem Idiom, Schriftzeichenstrich, häufig benutzten Fremdwort oder Basisschriftzeichen erzeugt werden.

25. Die Telefonauskunftsvorrichtung nach Anspruch 18, wobei das Akustikerkennungsgerät (10) weiter eine Spracherkennungsfunktion umfasst, die Sprachsignale erkennt und erkannte Wortsequenzen erzeugt.

26. Die Telefonauskunftsvorrichtung nach Anspruch 18, wobei das Akustikerkennungsgerät (10) weiter eine Konfusionsanalysefunktion umfasst, die die erkannten Wortsequenzen gemäß einer Konfusionsmatrix erweitert.

27. Die Telefonauskunftsvorrichtung nach Anspruch 26, wobei die Konfusionsmatrix (13) vorgebildet ist und alle verwechselbaren Wörter, entsprechende korrekte Wörter und die Wahrscheinlichkeiten des Vorkommens der Wörter enthält.

28. Die Telefonauskunftsvorrichtung nach Anspruch 18, wobei das Akustikerkennungsgerät (10) weiter eine Konfidenzmessvorrichtung (14) zum Herausfiltern verwechselbarer Wortpaare gemäß einer Konfusionsmatrix (15) umfasst.

29. Die Telefonauskunftsvorrichtung nach Anspruch 18, wobei das Sprachinterpretationsgerät (20) kontinuierlich den Systemstatus aktualisiert.

30. Die Telefonauskunftsvorrichtung nach Anspruch 18, weiter bestehend aus einem Fragengenerator (50) zur Erzeugung einer Frage mit Bitte um weitere Informationen.

31. Die Telefonauskunftsvorrichtung nach Anspruch 30, wobei die Frage eine Bitte an den Benutzer um weitere Informationen ist und eine listenbasierte Frage und eine offene Frage darstellen kann.

32. Die Telefonauskunftsvorrichtung nach Anspruch 18, wobei der mindestens eine Kandidat mittels einer Maximum-A-posteriori-Methode bzw. einer Maximum-Likelihood-Methode erzeugt wird.

33. Die Telefonauskunftsvorrichtung nach Anspruch 18, wobei das Übermittlungsgerät (60) ein Sprachausgabegerät ist.

34. Die Telefonauskunftsvorrichtung nach Anspruch 18, wobei die Vorrichtung eine Telefonauskunftsvorrichtung für Mandarin-Chinesisch ist.

## Revendications

1. Une méthode d'assistance au répertoire prévoyant la fourniture d'informations désirées, pour l'entrée dans un répertoire, à un utilisateur, et comprenant les opérations suivantes :
a) réception d'un signal vocal décrivant l'entrée désirée dans le répertoire,
b) reconnaissance du signal vocal et production de suites de mot reconnues ; et **caractérisée par** l'incorporation des interventions suivantes :
c) interprétation des suites de mots homophoniques comportant l'emploi d'une règle de grammaire prédéterminée à description du nom et autres informations pertinentes mémorisées dans une base de données de connaissances pertinentes (31) pour former des suites de concepts, la base de données de connaissances pertinentes (31) comprenant des mots et une ou plusieurs façons de décrire les mots comprenant les noms, noms de personnalités, idiomes, traits caractéristiques, mots étrangers utilisés fréquemment, racines de caractères ;
d) interprétation de suites de concept en fonction de leur signification sémantique, et d'informations pertinentes relatives mémorisée dans la base de données de connaissances pertinentes (31) et situation relative du système actuel, en produisant ainsi au minimum un candidat pour l'entrée désirée dans le répertoire ;
e) consultation d'au moins une information d'entrée dans le répertoire correspondant à au moins un candidat de la base de données ; et
f) sortie d'au moins une information d'entrée dans le répertoire.

2. La méthode selon la revendication 1, dans laquelle l'opération e) comprend en outre la production d'une question dans le cas d'incertitudes, pour requérir à l'utilisateur de décrire les noms de noms dans une entrée de base de données de répertoire candidate.

3. La méthode selon la revendication 1, comprenant également les opérations de rectification par l'utilisateur, ou la confirmation et la répétition des points a) à f) jusqu'à la localisation des informations désirées d'entrée dans le répertoire.

4. La méthode selon la revendication 1, dans laquelle l'opération a) comprend en outre l'opération du message d'invite du système avant la réception d'un signal de la parole.

5. La méthode selon la revendication 1, dans laquelle la règle de grammaire prédéterminée à description du nom et les suites de concept sont utilisées pour décrire l'entrée désirée dans le répertoire, comprenant le nom d'entrée ou au moins un mot du nom d'entrée et autres informations pertinentes.

6. La méthode selon la revendication 1, dans laquelle la règle de grammaire prédéterminée à description du nom est produite par des modèles de grammaire fréquemment utilisés, et des mots fréquemment utilisés.

7. La méthode selon la revendication 6, dans laquelle les modèles de grammaire sont produits par un des suivants : noms, noms de personnalités, idiomes, traits caractéristiques, lettres, mots, et racines de caractères, fréquemment utilisés.

8. La méthode selon la revendication 1, dans laquelle l'opération b) comprend également l'expansion de suites de mots reconnues, conformément à une table de confusion (13).

9. La méthode selon la revendication 8, dans laquelle la table de confusion (13) est préenregistrée, et comprend tous les mots prêtant à confusion, les mots corrects correspondants, et les probabilités de survenance.

10. La méthode selon la revendication 1, dans laquelle l'opération b) comprend également la mesure de la confiance pour éliminer par filtrage des paires de mots portant à confusion, conformément à une table de confiance (15).

11. La méthode selon la revendication 1, dans laquelle l'opération d) comprend également la mise à jour de l'état du système.

12. La méthode selon la revendication 1, dans laquelle la base de données de connaissances pertinente (31) comprend des mots et des fréquences d'utilisation de ces derniers, des méthodes de description des mots, des règles de grammaire, des attributs et des fréquences d'utilisation correspondantes.

13. La méthode selon la revendication 1, dans laquelle la base de données de connaissances pertinente (31) comprend des concepts de communication et des fréquences d'utilisation de ces derniers, des règles de grammaires correspondantes, la signification sémantique, et les fréquences d'utilisation.

14. La méthode selon la revendication 1, dans laquelle la base de données du répertoire (32) comprend une série d'entrées, et dans le cadre de laquelle chaque entrée comprend le nom, le numéro de téléphone, des informations pertinentes et la fréquence d'utilisation.

15. La méthode selon la revendication 1, dans laquelle le minimum d'un candidat est produit en utilisant un des suivants : un maximum de probabilités à posteriori et un maximum de critères de probabilité.

16. La méthode selon la revendication 1, dans laquelle la méthode est une méthode d'assistant de répertoire Mandarin.

17. Un programme informatique résidant sur un support lisible par ordinateur, présentant une série d'instructions stockées dans celui-ci, qui, lorsqu'elles sont exécutées par un processeur, permettent au processeur
- de recevoir un signal vocal décrivant l'entrée désirée dans le répertoire,
- de reconnaître le signal vocal et la production de suites de mot reconnues ; et **caractérisé par le fait que** le processeur :
- interprète des suites de mots homophoniques avec l'emploi d'une règle de grammaire prédéterminée à description du nom et autres informations pertinentes mémorisées dans une base de données de connaissances pertinentes (31) pour former des suites de concepts, la base de données de connaissances pertinentes (31) comprenant des mots et une ou plusieurs façons de décrire les mots comprenant les noms, noms de personnalités, idiomes, traits caractéristiques, mots étrangers utilisés fréquemment, racines de caractères ;
- interprète des suites de concept en fonction de leur signification sémantique, et d'informations pertinentes relatives mémorisées dans la base de données de connaissances pertinentes (31), et la situation relative du système actuel, en produisant ainsi au minimum un candidat pour l'entrée désirée dans le répertoire ;
- consulte au moins une information d'entrée dans le répertoire correspondant à au moins un candidat de la base de données ; et
- sort au moins l'information d'entrée située dans le répertoire.

18. Un appareil d'assistance au répertoire permettant de fournir des informations désirées d'entrée dans le répertoire, y compris
- une base de données (30) comprenant un base de données à répertoire (32) pour mémoriser des informations sur des entrées dans le répertoire, et une base de données de connaissances pertinentes (31) pour mémoriser des règles de grammaire et des suites de concepts ;
- un dispositif de reconnaissance acoustique (10) pour la réception d'un signal vocal décrivant l'entrée désirée dans le répertoire, reconnaissant le signal vocal et produisant des suites de mots reconnues ; **caractérisé par**
- un dispositif d'interprétation de la parole (20) pour l'interprétation des suites de mots homophoniques reconnues en faisant usage d'une règle de grammaire prédéterminée pour la description de noms et des informations relatives pertinentes stockées dans la base de données de connaissances pertinentes (31) pour former des suites de concepts, la base de données de connaissances pertinentes (31) comprenant des mots et une ou plusieurs façons de décrire les mots comprenant des noms utilisés fréquemment, des noms de personnalités,des idiomes, des traits de caractères, des mots étrangers utilisés fréquemment, des racines de caractères, et l'interprétation des suites de concept conformément à la signification sémantique et à des informations pertinentes sur celle-ci stockées dans la base de données de connaissances pertinente (31), et la situation actuelle du système correspondant, en produisant au minimum un candidat pour l'entrée désirée dans le répertoire ;
- Un dispositif de consultation (40) pour consulter au minimum une information d'entrée dans le répertoire correspondant à un candidat, au minimum, de la base de données du répertoire (32), et
- un dispositif de sortie (60) pour la sortie d'informations sur au moins une entrée sur le répertoire localisée.

19. L'appareil d'assistance au répertoire selon la revendication 18, dans lequel la règle de grammaire et les suites de concepts prédéterminées sont utilisés pour décrire l'entrée désirée dans le répertoire, comprenant le nom d'entrée ou au minimum un mot du nom d'entrée et des informations pertinentes sur celui-ci.

20. L'appareil d'assistance au répertoire selon la revendication 18, dans lequel la base de données de connaissances pertinente (31) est composée de mots et de fréquences d'utilisation, de modalités d'utilisation des mots, de règles de grammaire, d'attributs et de fréquences d'utilisation correspondantes.

21. L'appareil d'assistance au répertoire selon la revendication 18, dans lequel la base de données de connaissances pertinente (31) comprend des concepts de communication et des fréquences d'utilisation de ces derniers, des règles de grammaires correspondantes, une signification sémantique, et des fréquences d'utilisation.

22. L'appareil d'assistance au répertoire selon la revendication 18, dans lequel la base de données du répertoire (32) comprend une série d'entrées, et dans le cadre de laquelle chaque entrée comprend le nom, le numéro de téléphone, des informations pertinentes et des fréquences d'utilisation.

23. L'appareil d'assistance au répertoire selon la revendication 18, dans lequel la règle de grammaire prédéterminée est générée par des modèles de grammaire et des mots utilisés fréquemment.

24. L'appareil d'assistant au répertoire selon la revendication 23, dans lequel les modèles de grammaire sont générés par un des suivants : nom ; nom de personnalités ; idiomes ; traits de caractères ; lettres ; mots ; et racines de caractères.

25. L'appareil d'assistance au répertoire selon la revendication 18, dans lequel le dispositif de reconnaissance acoustique (10) comprend en outre un dispositif de reconnaissance de la parole (11) permettant de reconnaître le signal de la parole et de produire des suites de mots reconnues.

26. L'appareil d'assistance au répertoire selon la revendication 18, dans lequel le dispositif de reconnaissance acoustique (10) comprend en outre un analyseur de confusion (12) pour développer les suites de mots reconnues conformément à une table de confusion (13).

27. L'appareil d'assistance au répertoire selon la revendication 26, dans lequel la table de confusion (13) est préenregistrée, et comprend tous les mots portant à confusion, les mots corrects correspondants, et des probabilités survenant.

28. L'appareil d'assistance au répertoire selon la revendication 18, dans lequel le dispositif de reconnaissance acoustique (10) comprend en outre un dispositif de mesure de la confiance (14) pour extraire en les filtrant des paires de mots portant à confusion, selon une table de confiance (15).

29. L'appareil d'assistance au répertoire selon la revendication 18, dans lequel le dispositif d'interprétation de la parole (20) met constamment à jour le statut du système.

30. L'appareil d'assistance au répertoire selon la revendication 18, comprenant en plus un générateur de questions (50) pour la production d'une question pour demander des renseignements supplémentaires.

31. L'appareil d'assistance au répertoire selon la revendication 30, dans lequel la question consiste à demander à un utilisateur de fournir des informations supplémentaires, une confirmation à base de listing, et une confirmation à question ouverte.

32. L'appareil d'assistance au répertoire selon la revendication 18, dans lequel au minimum un candidat est généré en utilisant un des suivants : un maximum de probabilités à posteriori et un maximum de critères de probabilité.

33. L'appareil d'assistance au répertoire selon la revendication 18, dans lequel le dispositif de sortie est un dispositif de sortie de la parole.

34. L'appareil d'assistance au répertoire selon la revendication 18, dans lequel l'appareil d'assistance au répertoire est un appareil d'assistance au répertoire Mandarin.
